Europäisches Patentamt

(19) European Patent Office

Office européen des brevets

(11) Veröffentlichungsnummer: **0 057 416**
**B1**

(12) **EUROPÄISCHE PATENTSCHRIFT**

(45) Veröffentlichungstag der Patentschrift:
30.04.86

(21) Anmeldenummer: 82100538.6

(22) Anmeldetag: 27.01.82

(51) Int. Cl.⁴: **C 01 B 33/28,** B 01 J 20/18,
B 01 J 20/28, B 01 J 29/04

(54) Zeolithisches Molekularsieb und Verfahren zu seiner Herstellung.

(30) Priorität: 03.02.81 DE 3103533

(43) Veröffentlichungstag der Anmeldung:
11.08.82 Patentblatt 82/32

(45) Bekanntmachung des Hinweises auf die Patenterteilung:
30.04.86 Patentblatt 86/18

(84) Benannte Vertragsstaaten:
AT BE CH DE FR GB IT LI NL SE

(56) Entgegenhaltungen:
US - A - 3 386 802
US - A - 3 730 910
US - A - 3 777 006
US - A - 4 235 753

(73) Patentinhaber: Battelle-Institut e.V., Am
Römerhof 35 Postfach 900 160,
D-6000 Frankfurt/Main 90 (DE)

(72) Erfinder: Rottenbacher, Klaus, Dr., Viktoriastrasse 5,
D-6242 Kronberg (DE)
Erfinder: Helde, Helmut, Dr., Am Hohenstein 14,
D-6233 Kelkheim (DE)
Erfinder: Kuhn, Wolfgang, Dr., Oberhöchstädter Weg 13,
D-6000 Frankfurt/Main (DE)

(74) Vertreter: Rupprecht, Klaus, Dipl.-Ing., Am Römerhof 35,
D-6000 Frankfurt (Main) 90 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

2

**Beschreibung**

Die Erfindung betrifft ein zeolitsches Molekularsieb und Verfahren zu seiner Herstellung.

Natürliche und syntetische Zeilithe werden insbesondere als Adsorbentien, Molekularsiebe und Katalysatoren eingesetzt, und zwar in Form von Pellets, losen Schüttungen oder Festbettreaktoren. Verfahren zur Herstellung solcher Zeolithe sind z.B. in der US-A-3,777,006 und US-A-3,386,802 beschrieben. Diese Verwendungsformen weisen jedoch erhebliche Nachteile auf. So sind z.B. lose Schüttungen schlecht handhabbar und benötigen für die Regenerierung aufwendige Filtersysteme und Aufbereitungsschritte. Die Freisetzung von Zeolith-Staub kann eine nicht unerhebliche Umweltbelastung bedeuten, zudem manche faserförmige Zeolithe im Verdacht stehen, kanzerogen zu wirken. Die Festbettreaktoren neigen zu Verstopfungseffekten und können nur dort eingesetzt werden, wo keine Abscheidung fester Stoffe erfolgt. Die Regenerierung kann nur am ganzen Reaktor erolgen. Die Zeolith-Pellets zeigen oft eine verminderte Effektivität, da die Zeolithe im Innern der Pellets in Abhängigkeit von der Geometrie, Bindemittelanteil und Porosität nur bedingt an den gewünschten Reaktionen teilnehmen können. Eine Steigerung der Effektivität von Zeolith-Pellets durch Erhöhung der Porosität sind durch maximal zulässige Kalzinierungs- bzw. Sintertemperaturen zur Erzielung einer mechanischen Festigkeit und Abriebfestigkeit, Grenzen gesetzt. Eine Erhöhung der Effektivität durch höhere Pellet-Schüttungen läßt sich aufgrund der damit verbundenen Verminderung des Durchströmungsvermögens nur beschränkt erreichen. Aus der US-A-4,235,753 ist eine in-situ-Synthese von Zeolithen aus Kaolinton bekannt, bei der ein Formkörper aus calciniertem Kaolinton zu kristallinen Zeolithen umgewandelt wird. Während dieser Synthese werden durch Auslaugung von Kiesel- und Tonerde-Anteilen des Formkörpers Diffusionswege gebildet, in denen Simultan Zeolith-Kristalle wachsen. Das Endprodukt ist nicht porös. In der US-A-3,730,910 werden Zeolithe in Form von Tabletten oder Fasern hergestellt und sind für Schüttgutreaktoren verwendbar. Ein solches Katalysatorsystem erlaubt lediglich eine Strömung des Mediums zwischen den Pellets, wodurch die Durchströmung wesentlich verhindert wird.

Für alle Anwendungsfälle wire daher ein abriebfestes Gerüst aus Zeolith-Kristalliten, das eine durchgehende Makroporosität aufweist, ideal. Mit den herkömmlichen Synthesemethoden ist jedoch ein derartiges Gerüst nicht herstellbar und die Zeolithe weisen außerdem eine geringe Eigenfestigkeit auf.

Der vorliegenden Erfindung liegt daher die Aufgabe zugrunde, ein System zu finden, in dem die Anzahl der Zeolith-Kristallite, die für die Reaktion zur Verfügung steht, erhöht ist und das darüber hinaus eine verbesserte Handhabung, Regenerierbarkeit und mechanische Festigkeit aufweist.

Erfiniungsgemäß ist diese Aufgabe dadurch gelöst, daß der Träger offenporig ausgebildet ist und die Porenwandungen eine Zeolithbeschichtung aufweisen. Dieses System wird hergestellt indem man einen offenporigen Träger verwendet, an dessen Porenwandungen man eine Zeolithschicht aufwachsen läßt. Nach einer bevorzugten Ausführungsform wird der Träger mit einer Lösung oder einem Gel der den Zeolith bildenden Komponente getränkt. Der Träger kann aus Keramik auf der Basis von $SiO_2$ und $Al_2O_3$ bestehen.

Als Träger für den Zeolith kommen alle durchgehend offenporigen Strukturen in Frage. Kugelförmige Poren oder durchgehende zylindrische Kanäle sind bevorzugt. Bei Verwendung eines Trägers mit kugelförmigen Poren sollten die Porendurchgänge vorzugsweise kleiner sein, als die Größe der Zeolith-Kristalle. Der Träger kann keramisch, metallisch-keramisch oder metallisch sein oder aus Glas bestehen. Zur Herstellung solcher Träger wird z. B. eine dichte Schüttung von kugelförmigen Körpern gebildet, diese mit einer Suspension ausgegossen, die als Feststoffkomponente das Trägermaterial enthält, und schließlich das Gerüst nach Erhärten der Gießmasse ohne Zerstörung des bei der Erhärtung entstehenden Gebildes herausgelöst. Ein solches Verfahren ist z. B. in der DE-C- 2 242 907 beschrieben. Die Verwendung $Al_2O_3$ oder $SiO_2$-enthaltender keramischer Trägermaterialien fördert die Verbindung Zeolithkristallit-Poreninnenwand durch Gelreaktionen und/ oder Epitaxie-Effekte. Die Größe und Form des porösen Trägers können je nach Einsatzgebiet variiert werden.

Die Synthese der gewünschten Zeolithe erfolgt in Anlehnung an die herkömmlichen Verfahren direkt im porosen Träger. Nach einer bevorzugten Ausführungsform der Erfindung werden zuerst wässrige alkalische Silikatund Aluminat-Lösungen hergestellt die beim Vermischen Gele ergeben. Als Silikatquelle können wasserglas oder aktives, amorphes $SiO_2$ in Form von Kieselsolen oder -gelen dienen. Die Aluminat-Lösung wird in der Regel durch Auflösen von Aluminiumoxidhydraten in wässrigen Alkalihydroxidlösungen hergestellt. Als Alkalihydroxide dienen NaOH, KOH für bestimmte Strukturen auch im Gemisch mit organischen Aminen oder Ammoniumverbindungen. Der poröse Träger wird mit der Mischung der Silikat- und Aluminat-Lösungen getränkt. Die Zeolith-Synthese erfolgt durch hydrothermale Kristallisation der Gele, wobei die entstehenden Zeolith-Kristalle an den Poreninnenwänden fest aufwachsen. Eine Autoklavierung des Systems ist dabei möglich.

Da die großtechnische Herstellung von wässrigen Lösungen ausgeht, bildet sich auch innerhalb des Porenraums ohne Schwierigkeiten ein Gel. Ein vorbereitetes Gel bzw. eine gealterte Lösung kann aber auch in den porösen Träger eingepreßt werden.

Die durch die Erfindung erzielten Vorteile sind im wesentlichen darin zu sehen daß eine optimale Effektivität gegeben ist, weil die Zeolithe frei in den Porenraum ragen und einen unmittelbaren Kontakt zwischen Zeolith und durchströmendem Medium ermöglichen. Ferner ergibt sich eine höhere mechanische Festigkeit aus der Festigkeit des Trägerkörpers. Ferner ist die Regenerierung weitgehend problemlos und, da die Zeolithe in den Porenräumen geschützt sind, tritt weder ein Verlust durch mechanischen Abrieb noch durch andere Einwirkungen auf. Durch die definierbare Porosität des Trägers kann das Durchströmungsverhalten weitgehend gesteuert werden. Hinzu kommt, daß die Handhabung problemlos ist, da ein Reaktor in beliebig vielen Einheiten aufgeteilt werden kann. So ist es z. B. möglich, innerhalb eines Reaktors durch Verwendung von Einheiten mit unterschiedlichen Zeolithen die jede für sich ausgetauscht und regeneriert werden kann, Kolonnenfraktionierung durchzuführen. Die Gefahr einer erheblichen Freisetzung von Kristalliten ist gering, da die porösen Träger wie Filter wirken und kaum sperrige Kristallite durchlassen. Dazu kommt, daß die rasenartige bzw. verfilzte Belegung der Poreninnenräume einen zusätzlichen "Fänger" für lose Kristallite darstellt.

Im folgendem wird die Erfindung anhand von einen Ausführungsweg darstellenden Beispielen näher beschrieben.

**Beispiel 1**

Als Trägermaterial wird eine 1 cm dicke Keramikplatte aus cordieritischem Material mit zylindrischen Poren von 1 mm Durchmesser verwendet. Ein solches Material ist als sogenannte "Wabenkeramik" handelsüblich. Nach dem in Ullmanns Encyklopädie der technischen Chemie, 4. Aufl., Band 7, Seite 14 (Weinheim/New York 1979) beschriebenen Verfahren werden Lösungen von Na-Wasserglas (34,5 g entsprechend 21,5 g $SiO_2$ in 200 ml Wasser) und Na-Aluminat (37,5 g entsprechend 20 $Al_2O_3$ in 125 ml Wasser mit Zusatz von 10 g NaOH) hergestellt und zusammengegeben. Der Träger wird bei 40°C mit der Mischung getränkt. In den Poren des Trägers entsteht ein Gel, das 6 Stunden bei 60°C gehalten wird. Der Träger wird sodann mit Wasser gespült um anhaftende Gelteilchen zu entfernen, und bei 70°C getrocknet. Unter dem Elektronenmikroskop können an den aufgebrochenen Poren deutlich würfelförmige Zeolith-A-Kristalle von etwa 2μm kantenlänge festgestellt werden die dort an den Poreninnenwänden fest aufgewachsen sind und eine gleichmäßige Schicht bilden.

**Beispiel 2**

Das Verfahren des Beispiels 1 wird wiederholt, wobei jedoch diesesmal als Träger eine Platte aus mullitischem Material mit zylindrischen Poren von 0,5 mm Durchmesser verwendet wird. Die elektronenmikroskopische Untersuchung zeigt das gleiche Resultat wie im Beispiel 1.

**Beispiel 3**

Als Träger wird ein etwa 2 cm dicker zylindrischer Formkörper als $Al_2O_3$-Keramik mit offener, durchgehender Porosität verwendet. Die Herstellung des Trägers erfolgt nach dem in der DE-C 22 42 907 beschriebenen Verfahren. Die kugelförmigen Poren besitzen einen Durchmesser von ca. 3 mm und sind miteinander durch Kanäle bzw. Porenhälse von etwa 1 mm Durchmesser verbunden. Auch in diesem Körper werden die Poreninnenwände nach Tränkung und Kristallisation entsprechend dem Verfahren des Beispiels 1, mit aufgewachsenen Zeolithkristallen bedeckt.

## Patentansprüche

1. Zeolithisches Molekularsieb das an einem Träger auskristallisiert ist dadurch gekennzeichnet daß der Träger offenporig ausgebildet ist und die Porenwandungen eine Zeolithbeschichtung aufweisen.

2. Zeolithisches Molekularsieb nach Anspruch 1, dadurch gekennzeichnet, daß der Träger aus Keramik auf der Basis $SiO_2$, $Al_2O_3$ besteht.

3. Zeolithisches Molekularsieb nach Anspruch 1 und 2, dadurch gekennzeichnet, daß der Träger kugelförmige Poren und/oder zylindrische Kanäle aufweist.

4. Verfahren zur Herstellung eines zeolithischen Molekularsiebs durch Auskristallisieren des Zeoliths an einem Träger, dadurch gekennzeichnet, daß man einen offenporigen Träger verwendet, an dessen Porenwandungen man eine Zeolithschicht aufwachsen läßt.

5. Verfahren nach Anspruch 4 dadurch gekennzeichnet, daß der Träger mit einer Lösung oder mit einem Gel der den Zeolith bildenden Komponenten getränkt wird.

## Claims

1. Zeolitic molecular sieve crystallized on a carrier, characterized in that said carrier, has an open pore structure and the pore walls are coated with zeolite.

2. Zeolitic molecular sieve as claimed in claim 1, wherein the carrier consists of a ceramic material on the basis of $SiO_2$, $Al_2O_3$

3. Zeolitic molecular sieve as claimed in claim 1 and 2, wherein the carrier has spherical pores and/or cylindrical channels.

4. Method for producing a zeolitic molecular sieve by crystallization of the zeolite on a carrier, comprising using an open-pore carrier on the pore walls of which a zeolite coating is grown.

5. Method as claimed in claim 4, wherein the carrier is impregnated with a solution of with a gel of the components forming the zeolite.

## Revendications

1. Tamis moléculaire zéolithique qui est cristallisé sur un support, caractérisé en ce que le support est réalisé de facon à présenter des pores ouverts, et les parois des pores présentent une garniture de zéolithe.

2. Tamis moléculaire zéolithique suivant la revendication 1, caractérisé en ce que le support est constitué d'une céramique à base de $SiO_2$, $Al_2O_3$.

3. Tamis moléculaire suivant les revendications 1 et 2, caractérisé en ce que le support présente des pores sphériques et/ou de canaux cylindriques.

4. Procédé pur la fabrication d'un tamis moléculaire zeolithique, par cristallisation de la zéolithe sur un support, caractérisé en ce que l'on utilise un support à pores ouverts sur les parois intérieures desquelles il se forme par épitaxie une couche de zéolithe.

5. Procédé suivant la revendication 4, caractérisé en ce que l'on imprègne le support avec une solution ou un gel des composants formant la zéolithe.